# EUROPÄISCHE PATENTSCHRIFT

(11) **EP 2 772 741 B1**
(45) Veröffentlichungstag und Bekanntmachung des Hinweises auf die Patenterteilung: **01.05.2019**
(21) Anmeldenummer: 13004641.0
(22) Anmeldetag: 25.09.2013
(51) Int. Cl.: G01L 19/04, G01L 23/28, F01N 3/20

(54) **Drucksensor zur Messung eines Drucks, insbesondere in einem Abgassystem einer Brennkraftmaschine**
Pressure sensor for measuring pressure, in particular in an exhaust system of a combustion engine
Capteur de pression pour la mesure d'une pression, en particulier dans un système de gaz d'échappement d'un moteur à combustion interne

(30) Priorität: 28.02.2013 DE 102013003328
(43) Veröffentlichungstag der Anmeldung: 03.09.2014
(73) Patentinhaber: MAN Truck & Bus AG, 80995 München (DE)
(72) Erfinder: Harres, Ulrich, 90441 Nürnberg (DE); Reichert, Sebastian, 91448 Emskirchen (DE)
(74) Vertreter: v. Bezold & Partner Patentanwälte - PartG mbB

(56) Entgegenhaltungen:
- WO-A2-2011/042421
- DE-A1-102008 002 579
- DE-A1-102008 002 579
- DE-U1-202010 003 133
- DE-U1-202010 003 133

## Beschreibung

Die Erfindung betrifft einen Drucksensor zur Messung eines Drucks, insbesondere in einem Abgassystem einer Brennkraftmaschine, nach dem Oberbegriff des Anspruchs 1.

Zur Reduzierung von Schadstoffen im Abgas einer Brennkraftmaschine sind aufgrund gesetzlicher Vorgaben aufwändige und komplexe Abgassysteme erforderlich, die insbesondere verschiedene Katalysatoren und Partikelfilter aufweisen. Zur Funktionssteuerung und/oder Funktionsüberwachung solcher Abgassysteme sind in an sich bekannter Weise Druckmessungen mittels Drucksensoren und/oder Differenzdruckmessungen mittels Differenzdrucksensoren erforderlich.

Beispielsweise ist eine Überwachung eines verbauten Dieselpartikelfilters in einer Abgasnachbehandlungsanlage auf Beschädigung oder auf Verblockung (voller Filter) vorgeschrieben. Dazu wird der Differenzdruck zwischen einer Messstelle vor dem Dieselpartikelfilter und einer Messstelle nach dem Dieselpartikelfilter als Indikator für einen beschädigten oder vollen Dieselpartikelfilter erfasst. Derzeit eingesetzte Dieselpartikelfilter erzeugen jedoch nur einen sehr geringen Strömungswiderstand, der einem geringen Kraftstoffverbrauch zugutekommt. Dies hat zur Folge, dass der entstehende Differenzdruck bei einem leeren Dieselpartikelfilter im Vergleich zu einem ausgebauten bzw. beschädigten Dieselpartikelfilter nur einige hPa auseinander liegt. Bei einem konkreten leeren Dieselpartikelfilter ergibt sich beispielsweise im Motorbetrieb ein Differenzdruck von 12hPa und im gleichen Betriebspunkt bei einem defekten Dieselpartikelfilter ein Differenzdruck von 7 bis 8hPa, entsprechend einem Unterschied von ca. 4 bis 5hPa. Nach dem aktuellen Stand verbaute Druck-/Differenzdrucksensoren weisen jedoch nur eine ungenügende Genauigkeit auf, so dass damit ein defekter Dieselpartikelfilter nicht zweifelsfrei erkannt werden kann.

Für Überwachungen und/oder Steuerungsfunktionen sind somit in einem Abgassystem einer Brennkraftmaschine hochgenaue Druck-/Differenzdruckmessungen erforderlich.

DE 10 2008 002 579 A1 lehrt ein Mikro-elektromechanisches Sensorelement für den Einsatz in einer partikelhaltigen Umgebung. Die Sensorfunktion wird durch eine Membran verwirklicht, welche durch ein Heizmittel auf eine Temperatur oberhalb der Umgebungstemperatur aufgeheizt und auf diesem Temperaturniveau gehalten wird, um die Anlagerung von Partikeln und die Abscheidung von Substanzen auf der Membran zu verhindern.

DE 20 2010 003 133 U1 beschreibt einen mittels Kühlwasser gekühlten Drucksensor, der in heißer Umgebung eingesetzt wird und dessen Funktionsfähigkeit zu gewährleisten. Durch die gezielte Wahl des Abstandes zwischen Gehäuse und Sensormodul kann eine gezielte, feste Verteilung der Kühlung am Sensor erreicht werden.

WO 2011/042421 A2 lehrt eine Kühleinrichtung für einen zur Erfassung einer physikalischen Größe, beispielsweise Druck, vorgesehenen Sensor, der bei - gegenüber normalen Betriebsbedingungen - erhöhter Umgebungstemperatur einsetzbar sein soll. Hierzu ist der Sensor lösbar fest an einem Ende eines aus einem gut wärmeleitenden Material bestehenden rohrförmigen Sensorträgers einsetzbar, dessen anderes Ende thermisch an einem Kühlkörper angekoppelt ist. Zusätzlich ist der Sensorträger von einem sowohl mechanischen als auch thermischen Schutz vermittelndes Schutzgehäuse umgeben, wobei - um eine hinreichende Wärmeabfuhr zum Kühlkörper hin zu gewährleisten - der Wärmewiderstand der Wärmetransportstrecke Sensor-Kühlkörper klein gegen den Wärmewiderstand der Wärmetransportstrecke Schutzgehäuse-Sensor ausgelegt ist.

Aufgabe der Erfindung ist es daher, einen hochgenauen Drucksensor, gegebenenfalls als Differenzdrucksensor, zur Verfügung zu stellen, insbesondere einen hochgenauen Drucksensor in einem Abgassystem einer Brennkraftmaschine zur Verfügung zu stellen.

Diese Aufgabe wird mit den Merkmalen des Anspruchs 1 gelöst. Vorteilhafte Ausgestaltungen sind Gegenstand der Unteransprüche.

Gemäß Anspruch 1 umfasst ein Drucksensor ein Sensorgehäuse mit wenigstens einer darin angeordneten Druckmesszelle mit jeweils zugeordneter Sensorelektronik, wobei die wenigstens eine Druckmesszelle mit einer Messmediumleitung, insbesondere einer Abgasmessleitung als Messmediumleitung, verbunden ist. Erfindungsgemäß ist für den Drucksensor zur Steigerung der Messgenauigkeit eine Temperiereinrichtung vorgesehen.

Insbesondere bei einem relativ kleinen Druckmessbereich ist der Temperatureinfluss auf das Drucksignal groß und wirkt sich negativ auf die erreichbare Genauigkeit aus. Mit der Temperiereinrichtung wird für den Drucksensor ein konstantes Temperaturniveau erzeugt und gehalten, so dass Temperatureinflüsse mit der Problematik von Temperaturgradienten maßgeblich reduziert werden und eine hochgenaue Druckmessung/Differenzdruckmessung, insbesondere in einem Abgassystem einer Brennkraftmaschine, möglich wird.

Die Temperiereinrichtung wird erfindungsgemäß dadurch gebildet, dass ein Temperierfluid durch das Sensorgehäuse geleitet wird, wobei die Temperatur im Sensorgehäuse durch eine geregelte Heizung, vorzugsweise durch eine elektrisch betriebene Heizung des Temperierfluids auf einem konstanten Temperaturniveau gehalten wird. Damit werden in gewünschter Weise auch die Komponenten des Drucksensors, insbesondere die Druckmesszelle und die Sensorelektronik auf dem konstanten Temperaturniveau gehalten, so dass negative Temperatureinflüsse auf die Messgenauigkeit reduziert werden.

Die Temperiereinrichtung kann in einer besonders bevorzugten Ausführungsform dadurch gebildet sein, dass ein Temperierfluid durch das Sensorgehäuse geleitet wird, wobei die Temperatur im Sensorgehäuse durch eine geregelte Kühlung, vorzugsweise durch eine elektrisch betriebene Kühlung des Temperierfluids und/oder durch eine Regelung des Volumenstroms des Temperierfluids auf einem konstanten Temperaturniveau gehalten wird.

Die Temperiereinrichtung soll dabei durch Beheizung und/oder Kühlung so betrieben werden, dass der Drucksensor in einem Temperaturbereich gehalten wird, in dem er eine definiert vorgegebene, insbesondere seine höchste, Messgenauigkeit besitzt bzw. für welchen eine definiert vorgegebene, insbesondere die höchste, Messgenauigkeit ausgelegt ist.

Grundsätzlich kann je nach Einsatzfall ein beliebiges geeignetes Temperierfluid verwendet werden. Zweckmäßig wird zum Beispiel in Verbindung mit Fahrzeuganwendungen als Temperierfluid ein im Fahrzeug ohnehin zur Verfügung stehendes Fluid verwendet. Je nach den Gegebenheiten kann dies ein aus dem Motorkühlkreislauf abgezweigtes Motorkühlmittel oder ein Kraftstoff oder Motoröl sein. Insbesondere kann auch ein Harnstoff aufweisendes Fluid verwendet werden, welches in einem selektiven Reduktionsverfahren in einem Abgasstrang des Abgassystems zugeführt wird und daher die Fluidleitungen im Abgassystem verlaufen. Dieses Fluid kann somit einfach durch das Sensorgehäuse geleitet und anschließend einer Injektionsdüse zugeführt werden.

Alternativ oder zusätzlich zu einer Heizung/Kühlung mittels eines Fluids kann am oder im Sensorgehäuse wenigstens ein Wärmetauscher einer Heiz- und/oder Kühleinrichtung, vorzugsweise einer elektrisch betriebenen Heiz- und/oder Kühleinrichtung vorgesehen werden, mit dem die Temperatur im Sensorgehäuse geregelt auf einem konstanten Temperaturniveau gehalten wird.

Eine weitere Steigerung der Messgenauigkeit kann dadurch erreicht werden, dass zudem auch das Messmedium, insbesondere das Abgas als Messmedium, im Bereich der Druckmesszelle auf das konstante Temperaturniveau temperiert wird.

Die Steuerelektronik kann des Weiteren in einem Abstand zur Druckmesszelle angeordnet sein. Der Steuerelektronik wird dann eine druckabhängige Spannung aus der Druckmesszelle zugeführt, die für eine Ausgabe als Druckmesssignal von der Steuerelektronik gegebenenfalls in digitalisierter Form aufbereitet wird. In einer besonders bevorzugten konkreten Ausführung des Drucksensors ist die Sensorelektronik als applikationsspezifischer integrierter Haltleiterschaltkreis (ASIC) ausgebildet, kann jedoch grundsätzlich auch durch einen andere vergleichbare Elemente, zum Beispiel einen Mikrocontroller gebildet sein.

Die vorzugsweise durch ein ASIC gebildete Sensorelektronik soll Routinen zur Temperaturkompensation des Druckmesswerts beinhalten und dazu seine eigene Chiptemperatur oder gegebenenfalls die Temperatur in seiner unmittelbaren Nähe über ein externes Temperaturmesselement erfassen. Durch eine Abstandsminimierung zwischen der Druckmesszelle und der zugeordneten Sensorelektronik wird ein möglicher Temperaturgradient entsprechend minimiert und die Messgenauigkeit gesteigert.

Zudem soll der Sensorelektronik eine medienabgewandt an einer Temperaturmessstelle auf der Druckmesszelle erfasste Temperatur zur Verfügung gestellt werden. Der damit erfassbare Temperaturgradient zwischen Sensorelektronik und Druckmesszelle kann zur Messgenauigkeitssteigerung für eine Temperaturkompensation verwendet werden.

Für eine weitere Genauigkeitssteigerung ist es zudem möglich, der bevorzugt als ASIC ausgebildeten Sensorelektronik einen medienzugewandt an einer zweiten Temperaturmessstelle an der Druckmesszelle erfassten Temperaturwert des Messmediums zuzuführen. Damit kann der Temperaturunterschied zwischen der Temperatur an der medienabgewandten Seite der Druckmesszelle und der medienzugewandten Seite bei einer Temperaturkompensation berücksichtigt werden.

Die mit den vorstehend angegebenen Temperaturmessungen möglichen Temperaturkompensationen zu Genauigkeitssteigerung sind durch geeignete Rechenoperationen und/oder über festgelegte Kennfelder möglich.

Für eine reine Relativ- oder Absolutdruckmessung wird eine Druckmesszelle mit angeschlossener Abgasleitung und zugeordneter Sensorelektronik in einem Sensorgehäuse verwendet. Alternative oder zusätzlich werden für eine Gasdifferenzdruckmessung zwischen zwei Abgasmessleitungen entsprechend eine oder zwei Druckmesszellen mit zugeordneten Sensorelektroniken, insbesondere ASIC's, im Sensorgehäuse verwendet. Das eine Sensorgehäuse hat den Vorteil, dass nur an einem Ort die Temperatur ausgeglichen werden muss.

Als weitere Maßnahme zur Aufrechterhaltung eines konstanten Temperaturniveaus wird vorgeschlagen im Inneren des Sensorgehäuses Wärmeleitpasten anzubringen und/oder das Sensorgehäuse aus wärmeleitendem Gehäusematerial herzustellen.

Ein vorstehend beschriebener Drucksensor kann mittels Abgasmessleitungen zur Relativ-/Differenzdruckmessung über einem Oxidationskatalysator und einem Dieselpartikelfilter angeschlossen sein, insbesondere zur Überwachung des Dieselpartikelfilters auf Beschädigung und/oder Verblockung. Die dazu erforderliche Messgenauigkeit ist damit realisierbar.

Die mit den weiteren unabhängigen Ansprüchen 12 und 13 erzielbaren Vorteile entsprechen den zuvor in Verbindung mit der Würdigung des Drucksensors angegebenen Vorteilen, so dass diesbezüglich auf die vorstehend gemachten Ausführungen verwiesen wird.

Anhand einer Zeichnung wird die Erfindung weiter erläutert.

Es zeigen:
- Fig. 1: eine schematische Darstellung eines Abgassystems an einer Diesel-Brennkraftmaschine eines Nutzfahrzeugs, und
- Fig. 2: eine schematische Darstellung eines im Abgassystem nach Fig. 1 verwendeten Differenzdrucksensors.

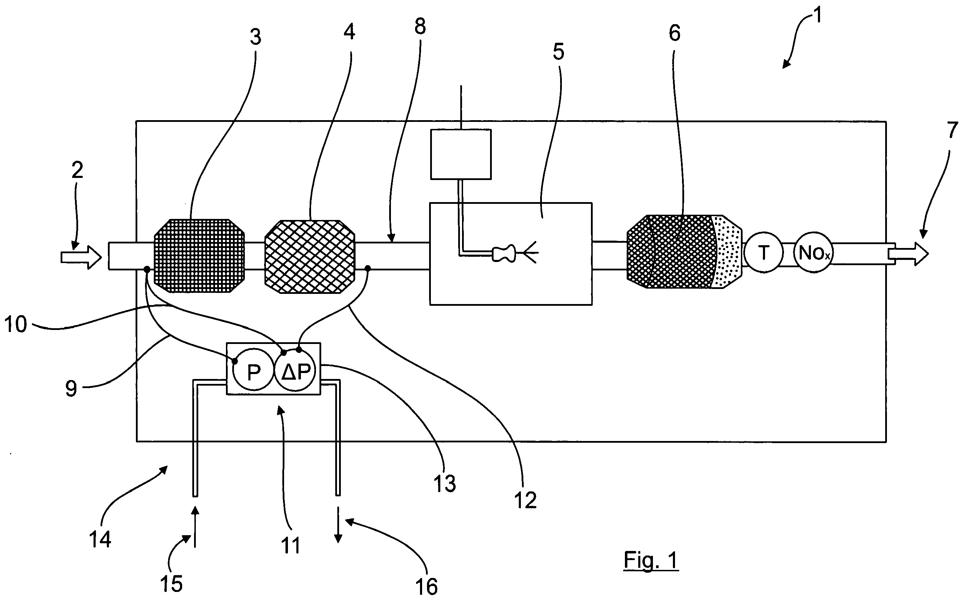

In Fig. 1 ist ein Abgassystem als Abgasnachbehandlungsanlage 1 schematisch dargestellt, dem Abgas einer Dieselbrennkraftmaschine zugeführt wird (Pfeil 2), welches der Reihe nach durch einen Oxidationskatalysator 3 und einen Dieselpartikelfilter 4 strömt. Nach einer SCR-Zudosierung 5 strömt das Abgas weiter durch einen SCR-Katalysator 6 sowie gegebenenfalls durch weitere Nachbehandlungs- und Messeinrichtungen und strömt anschließend aus (Pfeil 7). Vom Abgasstrang 8 vor dem Oxidationskatalysator 3 zweigt eine Abgasmessleitung 9 sowie eine weitere Abgasmessleitung 10 ab und führt zu einem (schematisch dargestellten) kombinierten Druck-/Differenzdrucksensor 11 zur Messung des Differenzdrucks über dem Oxidationskatalysator 3 und dem nachgeschalteten Dieselpartikelfilter 4. Nach dem Dieselpartikelfilter 4 zweigt vom Abgasstrang 8 eine weitere Abgasmessleitung 12 zum Druck-/Differenzdrucksensor 11 ab und ist dort ebenso wie die Abgasmessleitung 10 am Differenzdrucksensorelement (ΔP) angeschlossen. Dieser Differenzdruck wird als Indikator zur Überwachung insbesondere des Dieselpartikelfilters 4 auf Beschädigung und/oder auf Verblockung (voller Filter) erfasst. Der Druck-/Differenzdrucksensor 11 weist ein Sensorgehäuse 13 auf, welches mit einer Temperiereinrichtung 14 zur Steigerung der Messgenauigkeit ausgerüstet ist. Im konkret dargestellten Ausführungsbeispiel wird das Sensorgehäuse 13 zur Herstellung eines konstanten Temperaturniveaus von einem vom Kühlkreislauf der Brennkraftmaschine abgezweigten Kühlmittel durchströmt (Kühlmittelzufuhr Pfeil 15, Kühlmittelablauf Pfeil 16).

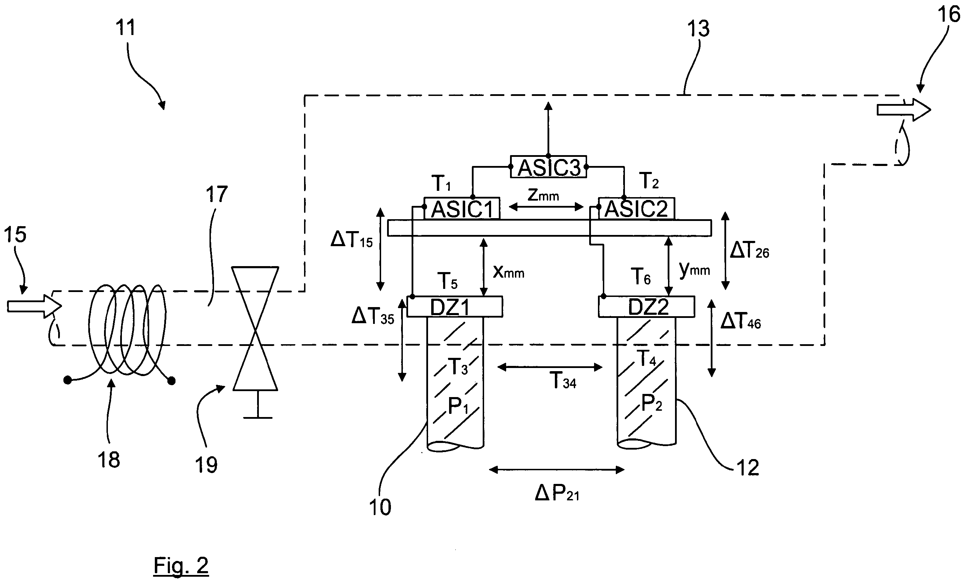

In Fig. 2 ist der Druck-/Differenzdrucksensor 11 mit weiteren Einzelheiten schematisch dargestellt. Auch hier ist die Kühlmittelzufuhr (Pfeil 15) und der Kühlmittelablauf (Pfeil 16) für die Kühlmittelströmung durch das Sensorgehäuse 1 ersichtlich. Das Kühlmittel als Fluid 17 wird hier mittels einer elektrischen Heizung 18 und/oder einer Volumenstromregelung 19 auf einem konstanten Temperaturniveau durch das Sensorgehäuse 13 geleitet.

Für die Differenzdruckmessung des Differenzdrucks ΔP₂₁ ist die Druckmessleitung 10 an eine Druckmesszelle DZ1 und die Druckmessleitung 12 an eine Druckmesszelle DZ2 angeschlossen. Ein von der Druckmesszelle DZ1 erzeugtes, druckabhängiges Spannungssignal wird bei der gezeigten Ausführungsvariante einem ASIC1 (ASIC = applikationsspezifischer integrierter Haltleiterschaltkreis) zugeführt. Entsprechend wird ein druckabhängiges Spannungssignal der Druckmesszelle DZ2 einem ASIC2 zugeführt. Die Druckmesszellen DZ1 und DZ2 sowie die angeschlossenen ASIC1 und ASIC2 sind im temperierten Sensorgehäuse 13 angeordnet.

Zur Erfassung des Differenzdrucks ΔP₂₁ wird mit DZ1 der Druck P1 in der Abgasmessleitung 10 und mit DZ2 der Druck P2 in der Abgasmessleitung 12 gemessen und jeweils ein entsprechendes Spannungsmesssignal dem ASIC1 bzw. ASIC2 zugeführt.

Für hochgenaue Druckmessungen werden im (bereits temperierten) ASIC1 und ASIC2 (gegebenenfalls auch mit weiteren nachgeschalteten Elektronickomponenten) Temperaturkompensationen durchgeführt:
Dazu werden folgende Temperaturen und damit Temperaturgradienten ermittelt und berücksichtigt:
Am ASIC1 und ASIC2 werden die jeweils dort anliegenden Temperaturen T1 und T2 erfasst (die konkret an den Temperaturmessstellen am ASIC1 und ASIC2 sowie an DZ1 und DZ2 angebrachten oder integrierten Temperaturmesselemente sind der Übersichtlichkeit halber nicht explizit eingezeichnet).

Weiter wird an DZ1 medienzugewandt, das heißt im Anschlussbereich der Messmediumleitung 10 eine Temperatur T3 und mediumabgewandt an einer weiteren Messstelle eine dortige Temperatur T5 erfasst. Diese Temperaturen T3, T5 werden ebenfalls dem ASIC1 zugeführt, wodurch für eine Temperaturkompensation die Temperaturdifferenzen ΔT₁₅ und ΔT₃₅ zur Verfügung stehen. Entsprechend werden im anderen Druckmesszweig mit der Abgasmessleitung 12 die medienzugewandte Temperatur T4 und die medienabgewandte Temperatur T6 an DZ2 erfasst und dem ASIC2 übermittelt, so dass auch dort die Temperaturdifferenzen ΔT₂₆ und ΔT₄₆ für eine Temperaturkompensation zur Verfügung stehen. Ebenso ergibt sich damit auch die Temperaturdifferenz ΔT₃₄, welche von ASIC1 zusammen mit ASIC2 berücksichtigt werden kann. Ersichtlich kann eine Angleichung der erfassten Temperaturen auf ein angestrebtes möglichst konstantes gleiches Temperaturniveau dadurch herbeigeführt werden, dass die Abstände x, y, z zwischen den einzelnen Sensorkomponenten möglichst klein gehalten werden und konstruktiv minimalisiert sind.

Die Druckmesssignale des ASIC1 und des ASIC2 werden einem weiteren ASIC3 zugeführt, in dem eine Differenzbildung erfolgt und ein hochgenaues Differenzdruckmesssignal für eine weitere Verarbeitung ausgegeben wird.

### Bezugszeichenliste

- 1: Abgassystem
- 2: Pfeil (Zufuhr)
- 3: Oxydationskatalysator
- 4: Dieselpartikelfilter
- 5: SCR-Zudosierung
- 6: SCR-Katalysator
- 7: Pfeil
- 8: Abgasstrang
- 9: Abgasmessleitung
- 10: Abgasmessleitung
- 11: Druck-/Differenzdrucksensor
- 12: Abgasmessleitung
- 13: Sensorgehäuse
- 14: Temperiereinrichtung
- 15: Pfeil (Kühlmittelzufuhr)
- 16: Pfeil (Kühlmittelablauf)
- 17: Fluid
- 18: elektrische Heizung
- 19: Volumenstromregelung

## Patentansprüche

1. Drucksensor (11) zur Messung eines Drucks, insbesondere in einem Abgassystem (1) einer Brennkraftmaschine, wobei der Drucksensor (11) ein Sensorgehäuse (13) mit wenigstens einer darin angeordneten Druckmesszelle (DZ) mit jeweils zugeordneter Sensorelektronik umfasst und die wenigstens eine Druckmesszelle (DZ) mit einer Messmediumleitung (9; 10; 12), insbesondere einer Abgasmessleitung verbunden ist, wobei für den Drucksensor (11) zur Steigerung der Messgenauigkeit eine Temperiereinrichtung (14) vorgesehen ist, **dadurch gekennzeichnet, dass** die Temperiereinrichtung (14) dadurch gebildet ist, dass ein Temperierfluid (17) durch das Sensorgehäuse (13) geleitet wird, wobei die Temperatur im Sensorgehäuse (13) durch eine geregelte Heizung, vorzugsweise durch eine elektrisch betriebene Heizung (18) des Temperierfluids (17) auf einem konstanten Temperaturniveau gehalten wird.

2. Drucksensor (11) nach Anspruch 1, **dadurch gekennzeichnet, dass** die Temperatur im Sensorgehäuse (13) auch durch eine Regelung (19) des Volumenstroms des Temperierfluids (17) auf einem konstanten Temperaturniveau gehalten wird.

3. Drucksensor (11) nach Anspruch 2, **dadurch gekennzeichnet, dass** der Drucksensor (11) mit der Temperiereinrichtung (14) durch Beheizung und/oder Kühlung in einem Temperaturbereich gehalten wird, in dem der Drucksensor (11) eine definiert vorgegebene, insbesondere seine höchste, Messgenauigkeit besitzt oder für welchen eine definiert vorgegebene, insbesondere die höchste, Messgenauigkeit ausgelegt ist.

4. Drucksensor (11) nach einem der Ansprüche 1 bis 3, **dadurch gekennzeichnet, dass** die Temperatur im Sensorgehäuse (13) durch eine Kühlung des Temperierfluids (17) auf einem konstanten Temperaturniveau gehalten wird.

5. Drucksensor (11) nach einem der Ansprüche 1 bis 4, **dadurch gekennzeichnet, dass** die Temperiereinrichtung (14) dadurch gebildet ist, dass ein Temperierfluid (17) durch das Sensorgehäuse (13) geleitet wird, wobei als Temperierfluid (17) ein in einem Fahrzeug mit Brennkraftmaschine zur Verfügung stehendes Fluid verwendet wird, insbesondere ein aus dem Motorkühlkreislauf abgezweigtes Motorkühlmittel oder ein Kraftstoff oder Motoröl oder ein einen Harnstoff aufweisendes Fluid verwendet wird, wobei in letzterem Fall das Harnstoff aufweisende Fluid einem selektiven Reduktionsverfahren in einem Abgasstrang (8) des Abgassystems (1) zugeführt wird, indem es, vorzugsweise nach dem Durchströmen des Sensorgehäuses (13), einer Injektionsdüse zuführbar ist oder in den Tank zurückgeführt wird.

6. Drucksensor (11) nach einem der Ansprüche 1 bis 5, **dadurch gekennzeichnet, dass** am oder im Sensorgehäuse (13) wenigstens ein Wärmetauscher einer Heiz- und/oder Kühleinrichtung, vorzugsweise einer elektrisch betriebenen Heiz- und/oder Kühleinrichtung vorgesehen ist, mit dem die Temperatur im Sensorgehäuse (13) geregelt auf einem konstanten Temperaturniveau gehalten wird.

7. Drucksensor (11) nach einem der Ansprüche 1 bis 6, **dadurch gekennzeichnet, dass** auch das Messmedium, vorzugsweise das Abgas als Messmedium, im Bereich der Druckmesszelle (DZ) auf ein konstantes Temperaturniveau temperiert wird.

8. Drucksensor (11) nach einem der Ansprüche 1 bis 7, **dadurch gekennzeichnet, dass** die Sensorelektronik des Drucksensors (11) als applikationsspezifischer integrierter Halbleiterschaltkreis (ASIC) ausgebildet ist, wobei vorzugsweise die Sensorelektronik in einem Abstand, bevorzugt in einem minimierten Abstand, zur Druckmesszelle (DZ) angeordnet ist, wobei der Sensorelektronik eine druckabhängige Spannung aus der Druckmesszelle (DZ) zugeführt wird, die für eine Ausgabe als Druckmesssignal aufbereitet wird.

9. Drucksensor (11) nach Anspruch 8, **dadurch gekennzeichnet,**
**dass** die Sensorelektronik, vorzugsweise ein ASIC, Routinen zur Temperaturkompensation des Druckmesswerts beinhaltet und dazu seine eigene Chiptemperatur (T1, T2) oder die Temperatur in seiner unmittelbaren Nähe über ein externes Temperaturmesselement erfasst, und
**dass** an der Sensorelektronik, vorzugsweise am ASIC, zudem eine medienabgewandt, an einer Temperaturmessstelle auf der Druckmesszelle (DZ) erfasste Temperatur (T5, T6) zur Verfügung gestellt wird, wobei bevorzugt vorgesehen ist, dass für eine weitere Genauigkeitssteigerung der Sensorelektronik, insbesondere dem ASIC, ein medienzugewandt an einer zweiten Temperaturmessstelle an der Druckmesszelle erfasster Temperaturwert (T3, T4) des Messmediums zugeführt wird.

10. Drucksensor (11) nach einem der Ansprüche 1 bis 9, **dadurch gekennzeichnet, dass** für eine reine Relativ- oder Absolutdruckmessung eine Druckmesszelle mit angeschlossener Abgasmessleitung (9) und zugeordneter Sensorelektronik, insbesondere zugeordnetem ASIC, in einem Sensorgehäuse (13) verwendet ist, und dass alternativ oder zusätzlich für eine Gas-Differenzdruckmessung zwischen zwei Abgasmessleitungen (10, 12) diese an zugeordneten zwei Druckmesszellen (DZ1, DZ2) mit entsprechender Sensorelektronik, insbesondere entsprechenden ASIC's (ASIC1, ASIC2), im Sensorgehäuse (13) angeschlossen sind.

11. Drucksensor (11) nach einem der Ansprüche 1 bis 10, **dadurch gekennzeichnet, dass** im Inneren des Sensorgehäuses (13) wenigstens eine Wärmeleitpaste angebracht ist und/oder dass das Sensorgehäuse (13) wenigstens bereichsweise aus einem wärmeleitenden Gehäusematerial hergestellt ist.

12. Drucksensor (11) nach einem der Ansprüche 1 bis 11, **dadurch gekennzeichnet, dass** der Drucksensor (11) mittels Abgasmessleitungen (9, 10, 12) an ein Abgassystem (1) zur Relativ-/Differenzdruckmessung über einem Oxidationskatalysator (3) und einem Dieselpartikelfilter (4) angeschlossen ist, insbesondere zur Überwachung des Dieselpartikelfilters (4), vorzugsweise auf Beschädigung und/oder Verblockung.

13. Abgassystem (1), insbesondere für ein Fahrzeug, mit einem Drucksensor(11) nach einem der vorhergehenden Ansprüche.

14. Fahrzeug, insbesondere Nutzfahrzeug, mit einem Drucksensor (11) nach einem der vorhergehenden Ansprüche 1-12.

15. Verfahren zur Betätigung eines Drucksensors (11), insbesondere in einem Abgassystem (1) eines Fahrzeugs, mit einem Drucksensor (11) nach einem der vorhergehenden Ansprüche 1-12.

## Claims

1. A pressure sensor (11) for measuring a pressure, in particular in an exhaust system (1) of a combustion engine, the pressure sensor (11) comprising a sensor housing (13) with at least one pressure measuring cell (DZ) arranged therein with respectively associated sensor electronics, and the at least one pressure measuring cell (DZ) being connected to a measurement medium line (9; 10; 12), in particular an exhaust measurement line, a temperature control device (14) being provided for the pressure sensor (11) to increase the measurement accuracy, **characterized in that** the temperature control device (14) is formed by a temperature control fluid (17) being led through the sensor housing (13), the temperature in the sensor housing (13) being kept at a constant temperature level by means of an electrically operated heater (18) of the temperature control fluid (17).

2. The pressure sensor (11) according to Claim 1, **characterized in that** the temperature in the sensor housing (13) is also kept at a constant temperature level by regulating (19) the volumetric flow of the temperature control fluid (17).

3. The pressure sensor (11) according to Claim 2, **characterized in that** the pressure sensor (11) with the temperature control device (14) is kept by heating and/or cooling in a temperature range in which the pressure sensor (11) has a defined specified, in particular its highest, measurement accuracy or for which a defined specified, in particular highest, measurement accuracy is designed.

4. The pressure sensor (11) according to one of Claims 1 to 3, **characterized in that** the temperature in the sensor housing (13) is kept at a constant temperature level by cooling the temperature control fluid (17).

5. The pressure sensor (11) according to one of Claims 1 to 4, **characterized in that** the temperature control device (14) is formed by a temperature control fluid (17) being led through the sensor housing (13), wherein the temperature control fluid (17) used is a fluid available in a vehicle with combustion engine, in particular a engine coolant branched off from the engine coolant circuit or a fuel or motor oil or a fluid having urea, wherein in the latter case the fluid having urea is supplied to a selective reduction process in an exhaust tract (8) of the exhaust system (1), **in that** it can be fed to an injection nozzle, preferably after flowing through the sensor housing (13), or is led back into the tank.

6. The pressure sensor (11) according to one of Claims 1 to 5, **characterized in that** at least one heat exchanger of a heating and/or cooling device, preferably an electrically operated heating and/or cooling device is provided on or in the sensor housing (13), with which the temperature in the sensor housing (13) is kept regulated to a constant temperature level.

7. The pressure sensor (11) according to one of Claims 1 to 6, **characterized in that** the measurement medium, preferably the exhaust as measurement medium, in the region of the pressure measuring cell (DZ) has its temperature controlled to a constant temperature level.

8. The pressure sensor (11) according to one of Claims 1 to 7, **characterized in that** the sensor electronics of the pressure sensor (11) are formed as an application-specific integrated semiconductor circuit (ASIC), wherein the sensor electronics are preferably arranged at a distance, preferably at a minimized distance, from the pressure measuring cell (DZ), wherein the sensor electronics are supplied with a pressure-dependent voltage from the pressure measuring cell (DZ), which is prepared for output as a pressure measured signal.

9. The pressure sensor (11) according to Claim 8, **characterized in that** the sensor electronics, preferably an ASIC, includes routines for the temperature compensation of the pressure measured value and, for this purpose, detects its own chip temperature (T1, T2) or the temperature in its immediate vicinity via an external temperature measuring element, and
**in that** on the sensor electronics, preferably on the ASIC, a temperature (T5, T6) facing away from the medium, detected at a temperature measuring point on the pressure measuring cell (DZ), is also provided, provision preferably being made that, for a further increase in accuracy, a temperature value (T3, T4) of the measurement medium facing the medium, detected at a second temperature measuring point on the pressure measuring cell, is fed to the sensor electronics, in particular the ASIC.

10. The pressure sensor (11) according to one of Claims 1 to 9, **characterized in that** for a pure relative or absolute pressure measurement, a pressure measuring cell with connected exhaust measuring line (9) and associated sensor electronics, in particular associated ASIC, is used in a sensor housing (13), and **in that**, alternatively or additionally for a gas differential pressure measurement between two exhaust measurement lines (10, 12), the latter are connected to associated second pressure measuring cells (DZ1, DZ2) having corresponding sensor electronics, in particular corresponding ASICs (ASIC1, ASIC2), in the sensor housing (13).

11. The pressure sensor (11) according to one of Claims 1 to 10, **characterized in that** at least one thermally conductive paste is applied in the interior of the sensor housing (13), and/or **in that** the sensor housing (13) is at least partly produced from a thermally conductive housing material.

12. The pressure sensor (11) according to one of Claims 1 to 11, **characterized in that** the pressure sensor (11) is connected by means of exhaust measuring lines (9, 10, 12) to an exhaust system (1) for relative/differential pressure measurement across an oxidation catalytic converter (3) and a diesel particulate filter (4), in particular for monitoring the diesel particulate filter (4), preferably for damage and/or blockage.

13. An exhaust system (1), in particular for a vehicle, having a pressure sensor (11) according to one of the preceding claims.

14. A vehicle, in particular utility vehicle, having a pressure sensor (11) according to one of the preceding Claims 1-12.

15. A method for actuating a pressure sensor (11), in particular in an exhaust system (1) of a vehicle, having a pressure sensor (11) according to one of the preceding Claims 1-12.

## Revendications

1. Capteur de pression (11) pour la mesure d'une pression, en particulier dans un système de gaz d'échappement (1) d'un moteur à combustion interne, le capteur de pression (11) comprenant un boîtier de capteur (13) doté d'au moins une cellule de mesure de pression (DZ) disposée dedans comportant un système électronique de détection respectivement associé et l'au moins une cellule de mesure de pression (DZ) étant connectée à une conduite de fluide de mesure (9 ; 10 ; 12), en particulier une conduite de mesure de gaz d'échappement, un dispositif de régulation de température (14) étant prévu pour le capteur de pression (11) afin d'augmenter la précision de mesure, **caractérisé en ce que** le dispositif de régulation de température (14) est constitué par le fait qu'un fluide de régulation de température (17) est conduit à travers le boîtier de capteur (13), la température à l'intérieur du boîtier de capteur (13) étant maintenue à un niveau de température constant par un chauffage régulé, de préférence par un chauffage (18) fonctionnant à l'électricité du fluide de régulation de température (17).

2. Capteur de pression (11) selon la revendication 1, **caractérisé en ce que** la température dans le boîtier de capteur (13) est aussi maintenue à un niveau de température constant par un réglage (19) du débit volumétrique du fluide de régulation de température (17).

3. Capteur de pression (11) selon la revendication 2, **caractérisé en ce que** le capteur de pression (11) est maintenu dans une plage de température grâce au dispositif de régulation de température (14) par chauffage et/ou refroidissement, dans laquelle le capteur de pression (11) possède une précision de mesure prédéfinie de manière définie, en particulier sa précision de mesure la plus élevée, ou pour laquelle une précision de mesure prédéfinie de manière définie, en particulier la précision de mesure la plus élevée, est établie.

4. Capteur de pression (11) selon une des revendications 1 à 3, **caractérisé en ce que** la température dans le boîtier de capteur (13) est maintenue à un niveau de température constant par un refroidissement du fluide de régulation de température (17).

5. Capteur de pression (11) selon une des revendications 1 à 4, **caractérisé en ce que** le dispositif de régulation de température (14) est constitué par le fait qu'un fluide de régulation de température (17) est conduit à travers le boîtier de capteur (13), un fluide disponible dans un véhicule à moteur à combustion interne étant utilisé comme fluide de régulation de température (17), en particulier un agent refroidissement de moteur dévié du circuit de refroidissement du moteur ou un carburant ou une huile de moteur ou un fluide contenant de l'urée étant utilisé, dans ce dernier cas, le fluide contenant de l'urée étant acheminé vers un procédé de réduction sélectif dans une ligne de gaz d'échappement (8) du système de gaz d'échappement (1) par le fait que, de préférence après avoir traversé le boîtier de capteur (13), il peut être acheminé vers une buse d'injection ou est renvoyé dans le réservoir.

6. Capteur de pression (11) selon une des revendications 1 à 5, **caractérisé en ce que**, au niveau du ou dans le boîtier de capteur (13), il est prévu au moins un échangeur de chaleur d'un dispositif de chauffage et/ou de refroidissement, de préférence d'un dispositif de chauffage et/ou de refroidissement fonctionnant à l'électricité, grâce auquel la température dans le boîtier de capteur (13) est maintenue de manière régulée à un niveau de température constant.

7. Capteur de pression (11) selon une des revendications 1 à 6, **caractérisé en ce que** le fluide de mesure, de préférence le gaz d'échappement faisant office de fluide de mesure, est aussi tempéré à un niveau de température constant dans la région de la cellule de mesure de pression (DZ).

8. Capteur de pression (11) selon une des revendications 1 à 7, **caractérisé en ce que** le système électronique de détection du capteur de pression (11) est réalisé sous forme d'un circuit semi-conducteur intégré (ASIC) spécifique à l'application, le système électronique de capteur étant disposé de préférence à une distance, de préférence à une distance minimisée, de la cellule de mesure de pression (DZ), une tension dépendant de la pression, qui est traitée pour une émission sous forme de signal de mesure de pression, étant acheminée depuis la cellule de mesure de pression (DZ) vers le système électronique de détection.

9. Capteur de pression (11) selon la revendication 8, **caractérisé en ce que** le système électronique de détection, de préférence un ASIC, contient des routines pour la compensation de température de la valeur de mesure de pression et détecte pour ce faire sa propre température de puce (T1, T2) ou la température à sa proximité immédiate par l'intermédiaire d'un élément externe de mesure de température, et
que, au niveau du système électronique de détection, de préférence au niveau de l'ASIC, en outre une température (T5, T6) détectée de manière détournée du fluide à un point de mesure de température sur la cellule de mesure de pression (DZ) est mise à disposition, dans lequel il est de préférence prévu, pour une augmentation supplémentaire de la précision, que soit acheminée au système électronique de détection, en particulier à l'ASIC, une valeur de température (T3, T4), détectée de manière tournée vers le fluide à un second point de mesure de température au niveau de la cellule de mesure de pression, du fluide de mesure.

10. Capteur de pression (11) selon une des revendications 1 à 9, **caractérisé en ce que**, pour une mesure de pression relative ou absolue, une cellule de mesure de pression dotée d'une conduite de mesure de gaz d'échappement raccordée (9) et d'un système électronique de détection associé, en particulier d'un ASIC associé, est utilisée dans un boîtier de capteur (13) et que, en alternative ou en complément, pour une mesure de pression différentielle de gaz entre deux conduites de mesure de gaz d'échappement (10, 12), celles-ci sont raccordées, au niveau de deux cellules de mesure de pression associées (DZ1, DZ2), à un système électronique de détection correspondant, en particulier à des ASIC correspondants (ASIC1, ASIC2), dans le boîtier de capteur (13).

11. Capteur de pression (11) selon une des revendications 1 à 10, **caractérisé en ce que**, à l'intérieur du boîtier de capteur (13), au moins une pâte conductrice thermique est placée et/ou que le boîtier de capteur (13) est fabriqué au moins par endroits à partir d'un matériau de boîtier conducteur thermique.

12. Capteur de pression (11) selon une des revendications 1 à 11, **caractérisé en ce que** le capteur de pression (11) est raccordé au moyen de conduites de mesure de gaz d'échappement (9, 10, 12) à un système de gaz d'échappement (1) pour la mesure de pression relative/différentielle par l'intermédiaire d'un catalyseur à oxydation (3) et d'un filtre à particules de gazole (4), en particulier pour surveiller le filtre à particules de gazole (4), de préférence pour vérifier s'il survient un endommagement et/ou un blocage.

13. Système de gaz d'échappement (1), en particulier pour véhicule, comportant un capteur de pression (11) selon une des revendications précédentes.

14. Véhicule, en particulier véhicule utilitaire comportant un capteur de pression (11) selon une des revendications précédentes 1 à 12.

15. Procédé d'actionnement d'un capteur de pression (11), en particulier dans un système de gaz d'échappement (1) d'un véhicule, comportant un capteur de pression (11) selon une des revendications précédentes 1 à 12.
